# EUROPEAN PATENT SPECIFICATION

(11) **EP 4 562 074 B1**
(45) Date of publication and mention of the grant of the patent: **16.09.2026**
(21) Application number: 23754983.7
(22) Date of filing: 26.07.2023
(51) Int. Cl.: C08G 63/137, C08G 63/199, C09D 167/00, C09D 167/02

(54) **THERMOSETTING POWDER COATING COMPOSITIONS**
WÄRMEHÄRTENDE PULVERLACKZUSAMMENSETZUNGEN
COMPOSITIONS DE REVÊTEMENT EN POUDRE THERMODURCISSABLES

(30) Priority: 27.07.2022 US 202263392723 P
(43) Date of publication of application: 04.06.2025
(73) Proprietor: Eastman Chemical Company, Kingsport, TN 37660 (US)
(72) Inventor: MADDOX, John, Thorton, Jonesborough, TN 37659 (US); WEBSTER, JR., Geoffrey Richard, Kingsport, TN 37664 (US); MARSH, Stacey, James, Church Hill, TN 37642 (US); KULKARNI, Sunil, Vilas, Kingsport, TN 37664 (US); MUKHERJEE, Soma, Johnson City, TN 37604 (US); KUO, Thauming, Kingsport, TN 37664 (US)
(74) Representative: Ricker, Mathias
(86) International application number: PCT/US2023/070992
(87) International publication number: WO 2024/026335

(56) References cited:
- US-A1- 2021 163 781
- US-A1- 2021 388 229
- US-B2- 9 487 619

## Description

### Field of the Invention

The invention relates to powder coating compositions comprising carboxyl-functional polyesters. The polyesters are comprised of residues of 2,2,4,4-tetramethyl-1,3-cyclobutanediol and 1,4-cyclohexanedimethanol.

### Background of the Invention

There have been increasing demands for powder coatings in the industry due to their good corrosion protection and outdoor durability. Various types of resin technologies are used for powder coatings. These include epoxy, polyester, acrylic, and the hybrids thereof. For outdoor applications, polyester, fluoropolymer, and acrylic resins are commonly used. Polyesters generally provide a good balance of desirable coating properties such as appearance and impact resistance, while acrylic resins and fluoropolymers typically exhibit better weatherability. Typical polyesters used in powder coatings rely on aromatic monomers to obtain usable glass transition temperatures. This can limit weatherability. Thus, it would be highly desirable to develop a polyester-based powder coating composition having good weatherability while also possessing a glass transition temperature (T_{g}) suitable for powder coating systems.

US patent 9,487,619 B2 discloses tetra-alkylcyclobutanediol (TACD)-containing carboxyl-functionalized polyesters for water- and solvent-borne thermosetting coating compositions. US patent application 2021/163781 A1 discloses hydroxy-functionalized polyesters for use in aqueous coating compositions. US patent application 2021/388229 A1 discloses acetoacetate-functionalized, TACD-containing-polyesters curable with polyaldehydes to form coatings.

### Summary of the Invention

In summary, the invention provides polyester-based powder coating compositions useful in the coating of shaped or formed articles, which exhibit improved mechanical properties and weathering. In general, the polyesters are comprised of about 25 to about 75 mole percent of residues of 2,2,4,4-tetramethyl-1,3-cyclobutanediol (TMCD) and about 20 to about 65 mole percent of residues of 1,4-cyclohexane dimethanol. The polyester components of the compositions are formulated as predominantly carboxyl-functional and have an acid number of about 20 to 100 mg KOH/g of resin, and thus are suitably cross-linked in a thermosetting powder coating composition system with cross-linking compounds known to react with such carboxyl groups. Exemplary cross-linkers include β-hydroxyalkylamides and glycidyl-functional compounds.

### Brief Description of the Drawings

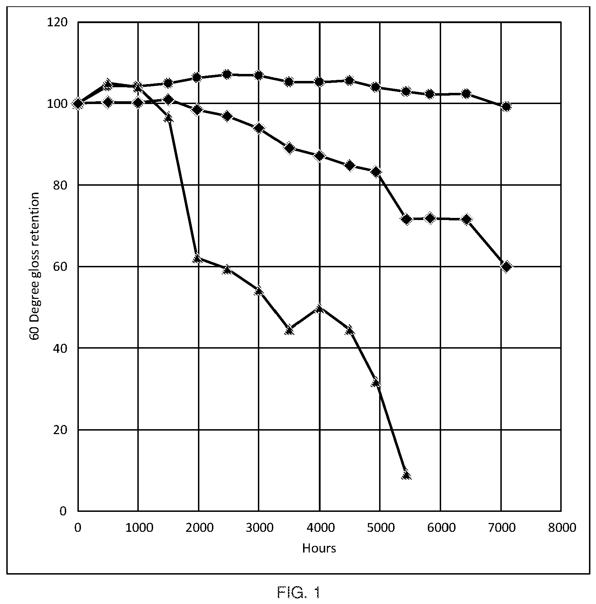

FIG. 1 depicts Xenon weathering of black coatings comparing TMCD-based resins to fluoroethylene vinyl ether-based resins and a super durable control resin, according to ISO Test 16474-2. These coating compositions were formulated without light stabilizers. In this graph, 60 degree gloss retention is plotted versus hours. The circular data points represent the coating of Example 21, the triangle-shaped data points represent Example 17, and the diamond-shaped data points represent Example 19.

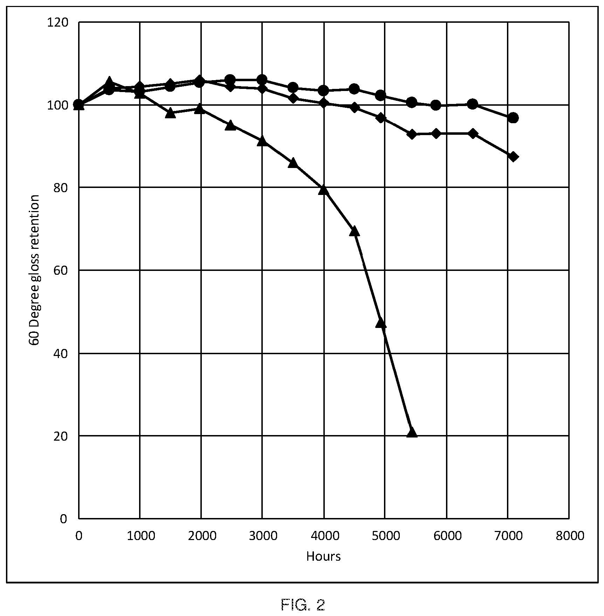

FIG. 2 depicts Xenon weathering of black coatings comparing TMCD-based resins to fluoroethylene vinyl ether-based resins and a super durable control resin, according to ISO Test 16474-2. These coating compositions were formulated with light stabilizers. In this graph, 60 degree gloss retention is plotted versus hours. The circular data points represent the coating of Example 20, the triangle-shaped data points represent Example 16, and the diamond-shaped data points represent Example 18.

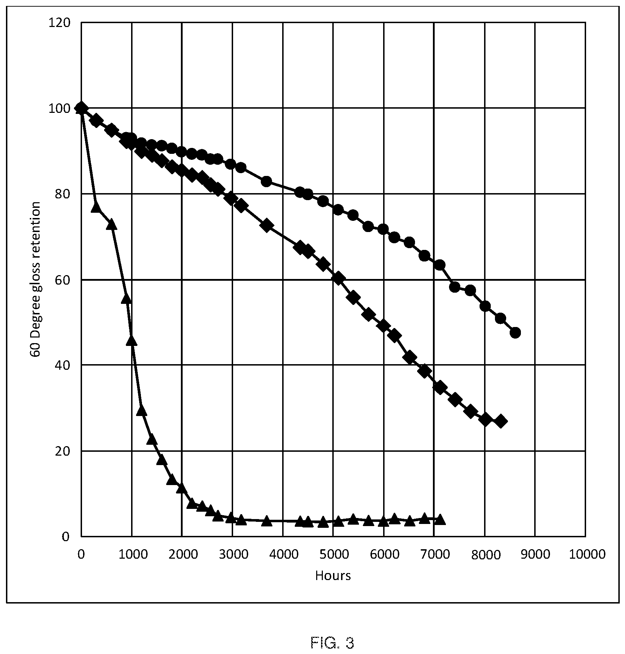

FIG. 3 depicts UV 313 nm bulb weathering of black coatings comparing TMCD-based resins to fluoroethylene vinyl ether-based resins and a super durable control resin, according to ISO Test 16474-3. These coating compositions were formulated without light stabilizers. In this graph, 60 degree gloss retention is plotted versus hours. The circular data points represent the coating of Example 21, the triangle-shaped data points represent Example 17, and the diamond-shaped data points represent Example 19.

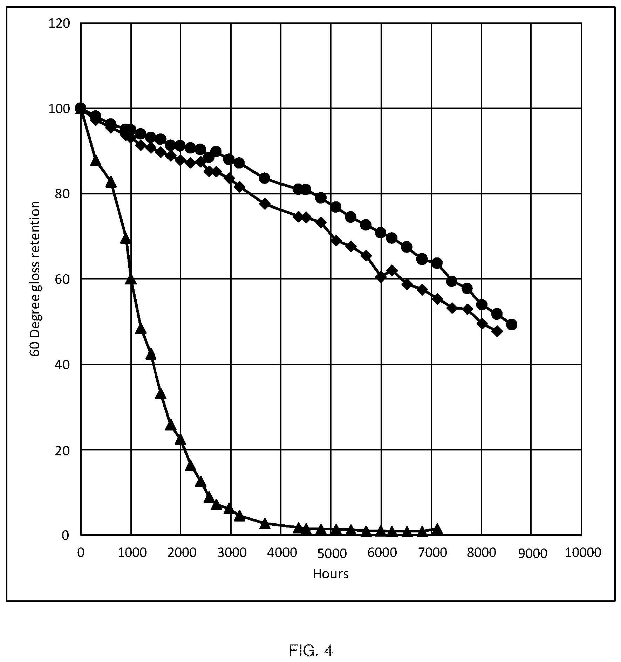

FIG. 4 depicts UV 313 nm bulb weathering of black coatings comparing TMCD-based resins to fluoroethylene vinyl ether- based resins and a super durable control resin, according to ISO Test 16474-3. These coating compositions were formulated with light stabilizers. In this graph, 60 degree gloss retention is plotted versus hours. The circular data points represent the coating of Example 20, the triangle-shaped data points represent Example 16, and the diamond-shaped data points represent Example 18.

### Detailed Description

In a first aspect, the invention provides a powder coating composition comprising:
A. at least one carboxyl-functional polyester which comprises:
   1. a polyol component comprising:
      i. about 25 to about 75 mole percent of 2,2,4,4-tetramethyl-1,3-cyclobutanediol residues, based on the total moles of i., ii., iii., and iv.;
      ii. about 20 to about 65 mole percent of 1,4-cyclohexane dimethanol residues, based on the total moles of i., ii., iii., and iv.;
      iii. 0 to about 15 mole percent of acyclic diol residues, based on the total moles of i., ii., iii., and iv.; and
      iv. about 3 to about 20 mole percent of trimethylolpropane residues, based on the total moles of i., ii., iii., and iv.; and
   2. a dicarboxylic acid component comprising:
      v. about 70 to about 100 mole percent of hexahydrophthalic anhydride residues, based on the total moles of v. and vi.; and
      vi. 0 to about 30 mole percent of acyclic diacid residues, based on the total moles of v. and vi.;
      wherein the polyester has a glass transition temperature of about 45° to 90°C, an acid number of about 20 to about 100 mg KOH/g, a number average molecular weight of about 2,000 to 10,000 g/mole, and a weight average molecular weight of about 5,000 to 100,000 g/mole; and
B. one or more compounds reactive with the carboxyl-functional polyester.

It should be understood that the following is not intended to be an exclusive list of defined terms. Other definitions may be provided in the description, such as, for example, when accompanying the use of a defined term in context. As used herein, the terms "a," "an," and "the" mean one or more. As used herein, the term "and/or," when used in a list of two or more items, means that any one of the listed items can be employed by itself or any combination of two or more of the listed items can be employed. For example, if a composition is described as containing components A, B, and/or C, the composition can contain A alone; B alone; C alone; A and B in combination; A and C in combination, B and C in combination; or A, B, and C in combination.

The term "polyester", as used herein, is intended to include "copolyesters" and is understood to mean a synthetic polymer prepared by the reaction of one or more difunctional carboxylic acids and/or multifunctional carboxylic acids with one or more difunctional hydroxyl compounds and/or multifunctional hydroxyl compounds, as referred to above as comprised of a dicarboxylic acid component and a polyol component. Typically, the difunctional carboxylic acid can be a dicarboxylic acid and the difunctional hydroxyl compound can be a dihydric alcohol, for example, glycols and diols. The term "polyol" as used herein includes, but is not limited to, diols, glycols, and/or multifunctional hydroxyl compounds. The term "residue", as used herein, means any organic structure incorporated into a polymer through a polycondensation and/or an esterification reaction from the corresponding monomer. The term "repeating unit", as used herein, means an organic structure having a dicarboxylic acid residue and a diol residue bonded through an ester group. Thus, for example, the dicarboxylic acid residues may be derived from a dicarboxylic acid monomer or its associated acid halides, esters, salts, anhydrides, and/or mixtures thereof. Furthermore, as used herein, the term "diacid" includes multifunctional acids. As used herein, therefore, the term "dicarboxylic acid" is intended to include dicarboxylic acids and any derivative of a dicarboxylic acid, including its associated acid halides, esters, half-esters, salts, half-salts, anhydrides, mixed anhydrides, and/or mixtures thereof, useful in a reaction process with a diol to make a polyester.

The stoichiometry of the polyol components and dicarboxylic acid components can be adjusted as needed to obtain the desired acid number (and/or hydroxyl number) in the final carboxyl-functional polyester to be utilized in the powder coating composition.

The polyester portion of the compositions of the invention can be made by processes known in the art, for example, by processes in homogenous solution, by transesterification processes in the melt, and by two phase interfacial processes. Suitable methods include, but are not limited to, the steps of reacting one or more dicarboxylic acids with one or more diols at a temperature of 100°C to 315°C at a pressure of 0.1 to 760 mm Hg for a time sufficient to form a polyester. See U.S. Pat. No. 3,772,405 for methods of producing polyesters.

In one embodiment, the carboxyl-functional polyester is comprised of all aliphatic groups or is comprised of substantially no aromatic groups. In another embodiment, the carboxyl-functional polyester comprises not more than about 10 mole percent aromatic diacid residues, such as isophthalic acid and terephthalic acid, based on the total moles of the dicarboxylic acid components.

In another embodiment, the polyol component comprises about 30 to about 65, about 35 to about 65 or about 25 to about 55 mole percent of 2,2,4,4-tetramethyl-1,3-cyclobutanediol residues; about 30 to about 60 or about 40 to about 60 mole percent of 1,4-cyclohexane dimethanol residues; 0 to about 10 mole percent of an acyclic diol, and about 3 to about 20, about 3 to about 15, or about 5 to 15 mole percent of trimethylolpropane residues; and the dicarboxylic acid component comprises about 100 to about 80 mole percent of hexahydrophthalic anhydride residues; and 0 to about 20 mole percent of acyclic diacid residues.

In another embodiment, the polyol component comprises about 40 to about 55 mole percent of 2,2,4,4-tetramethyl-1,3-cyclobutanediol residues, about 40 to 55 mole percent of 1,4-cyclohexane dimethanol residues, 0 to about 5 mole percent of an acyclic diol, and 3 to about 15 or about 5 to about 15 mole percent of trimethylolpropane resides, and wherein the dicarboxylic acid component comprises about 90 to about 100 mole percent of hexahydrophthalic anhydride residues, and 0 to about 10 mole percent of an acyclic aliphatic diacid.

Exemplary acyclic diols include neopentyl glycol (NPG), 2-butyl-2-ethyl-1,3-propanediol (BEPD), hydroxypivalyl hydroxypivalate (HPHP), 1,6-hexanediol, 1,4-butanediol, ethylene glycol, propylene glycol, 2-methyl-1,3-propanediol (MPDiol), and mixtures thereof. In one embodiment, the acyclic diol is neopentyl glycol, *i.e.,* 2,2-dimethylpropane-1,3-diol.

In certain embodiments, the acyclic diacid is a C₄-C₁₀ diacid. Exemplary acyclic diacids include succinic acid, adipic acid, and sebacic acid. In one embodiment, the acyclic diacid is adipic acid.

As noted above, the carboxyl-functional polyester has, in one aspect, an acid number of about 20 to about 100 mg KOH/g resin. In certain embodiments, the polyester has an acid number of about 30 to about 80, about 35 to about 70 or about 40 to about 60 mg KOH/g.

In certain embodiments, the carboxyl-functional polyester has a hydroxyl number of 0 to about 20, 0 to about 15, 0 to about 10, or 0 to about 5 mg KOH/g resin.

As noted above, the carboxyl-functional polyesters have a glass transition temperature of about 45° to 90°C. In certain embodiments, the polyester has a T_{g} of about 50° to 80°C, 50° to 70°C or about 55° to about 75°C.

As noted above, the carboxyl-functional polyester will have a number average molecular weight of about 2,000 to about 10,000 g/mole. In certain embodiments, the carboxyl-functional polyester will have a number average molecular weight of about 2,000 to about 9,000 or about 2,000 to about 8,000 g/mole. As noted above, the carboxyl-functional polyester will have a weight average molecular weight of about 5,000 to about 100,000. In certain embodiments, the carboxyl-functional polyester will have a weight average molecular weight of about 5,000 to about 80,000 or about 5,000 to about 50,000 g/mole.

In certain embodiments, the compound reactive with the carboxyl-functional polyester is a cross-linker chosen from β-hydroxyalkylamides and glycidyl-functional compounds. In certain embodiments, the β-hydroxyalkylamide is chosen from bis(N,N'-dihydroxyethyl)adipamide, bis(N,N'-dihydroxypropyl)adipamide, or a mixture thereof. Commercially-available β-hydroxyalkylamides include bis(N,N'-dihydroxyethyl)adipamide (Primid^{®} XL-552), bis(N,N'-dihydroxypropyl)adipamide (Primid^{®} QM-1260), and Primid^{®} SF-4510 available from EMS-GRILTECH. Also commercially available is Megamid XL from MEGARA RESINS-ANASTASIOS FANIS S.A.

Commercially-available glycidyl functional curing agents include glycidyl based crosslinkers available from Huntsman as Araldite PT 810, PT910, and PT 912. Also suitable are glycidyl acrylates and glycidyl methacrylates such as those commercially available as GMA 300G, 400G and 500 from Estron Chemical.

In other embodiments, the compound reactive with the carboxyl-functional polyester is an epoxy resin. Exemplary epoxy resins include those having a molecular weight of about 300 to about 4000, and have approximately 0.05 to about 0.99 epoxy groups per 100 grams of resin (*i.e.,* 100-2000 weight per epoxy (WPE)). Such resins are widely known and commercially available under the EPON^{®} mark (Hexion), and Araldite^{®} from Huntsman.

In the coating compositions of the invention, in certain embodiments the polyester is present in an amount of about 70 to about 97 percent, by weight, and the cross-linker is present in an amount of about 3 to about 30 percent, by weight, based on the total amount of carboxyl-functional polyester and cross-linker. In another embodiment, the coating composition of the present invention the carboxyl-functional polyester is present in an amount of about 75 to 95 or 80 to 90 weight percent and the cross-linker is present in an amount of about 5 to 25 or 10 to 20 weight percent, based on the total weight of carboxyl-functional polyester and cross-linker.

In another aspect, the invention provides a powder coating composition comprising:
A. at least one carboxyl-functional polyester which comprises:
   1. a polyol component comprising:
      i. about 40 to about 55 mole percent of 2,2,4,4-tetramethyl-1,3-cyclobutanediol residues, based on the total moles of i., ii., iii., and iv.;
      ii. about 40 to about 55 mole percent of 1,4-cyclohexane dimethanol residues, based on the total moles of i., ii., iii., and iv.;
      iii. 0 to about 5 mole percent of acyclic diol residues, based on the total moles of i., ii., iii., and iv.;
      iv. about 5 to about 12 mole percent of trimethylolpropane residues, based on the total moles of i., ii., iii., and iv.; and
   2. a dicarboxylic acid component comprising:
      v. about 90 to about 100 mole percent of hexahydrophthalic anhydride residues, based on the total moles of v. and vi.; and
      vi. 0 to about 10 mole percent of acyclic diacid residues, based on the total moles of v. and vi.;
      wherein the polyester has a glass transition temperature of about 45° to 90°C, an acid number of about 20 to about 80 mgKOH/g, a number average molecular weight of about 2,000 to 10,000 g/mole, and a weight average molecular weight of about 5,000 to 100,000 g/mole; and
B. a β-hydroxyalkylamide cross-linker.

In one embodiment, the β-hydroxyalkylamide cross-linker will be present in an amount of about 3 to about 20 weight percent, based on the total weight of A and B.

In other embodiments, the powder coating compositions of the invention may further comprise waxes, pigments, fillers, degassing agents, flow agents, and/or other additives. Examples of pigments include inorganic and organic pigments such as titanium dioxide, iron oxide, chromium oxide, zinc sulfide, zinc phosphate, mica, azo compounds, and the like. Suitable fillers include silicates, sulfates, and carbonates. Examples of additives include degassing agents, antioxidants, and UV stabilizers. Exemplary weathering stabilizers that can be used in these embodiments include are hindered amine light stabilizers and UV absorbers. Examples of degassing agents include cyclohexane dimethanol dibenzoate, benzoin, and benzoin derivatives. Examples of flow control agents include Byk^{®} 361 N (BYK) and Resiflow^{®} PV-5 (Estron). Further examples of typical additives for powder coating compositions can be found in U.S. Patent No. 10,916,539.

The powder coating compositions of the invention may be prepared by any methods known in the art. In a typical method, the powders of the carboxyl-functional polyester and the crosslinker are mixed along with any desired additives at room temperature to obtain a premix. The premix is then extruded at an elevated temperature such as, for example, 80° to 130°, 90° to 125°, or 100° to 120 °C, to yield an extrudate, which is then cooled to solidify the mixture. The resulting solid is then made into powder by milling and subsequently sieved to classify the size of the particles. The powder coating of the present invention desirably has particle sizes less than about 120 µm, less than 110 µm, or less than 100 µm.

The powder coating composition may be applied to a substrate by a common method such as electrostatic spray deposition (ESD) or fluidized bed application. The coating may be cured at 140° to 220°C, 140° to 200°C, 140° to 180°C, or 140° to 160°C for 10 minutes to one hour, or other suitable conditions.

See also: User's Guide to Powder Coating, 4th Ed., Nicholas Liberto, editor, Society of Manufacturing Engineers (2003).

As noted above, the powder coating compositions of the invention can be applied to a substrate or shaped or formed article. Thus, a further aspect of the present invention is a shaped or formed article, of which at least a portion has been coated with the coating compositions of the present invention. The substrate can be any common substrate such as aluminum, tin, steel or galvanized sheeting, and the like. The coating composition can be coated onto a substrate using techniques known in the art, for example, by electrostatic spray deposition (ESD) or fluidized bed application at a thickness of about 25 µm (1 mil) to about 250 µm (10 mils) (1 mil = 25 µm). The coating can be cured at a temperature of about 140°C to about 230°C for a time period that ranges from about 10 minutes to about 60 minutes and allowed to cool.

One mechanical property of the cured (*i.e.,* thermoset) powder coating of the invention can be determined by the Erichsen cupping test in accordance with ISO-1520. In some embodiments, the powder coating of the present invention exhibits an Erichsen cupping test rating of greater than 4.0 mm onset of cracking, greater than 4.5 mm, or greater than 5 mm.

The weatherability of the powder coating of the invention can be determined by the gloss loss over time under the light exposure of xenon arc, UVA, or UVB. The advantageous weatherability of the present invention is demonstrated by comparing the performance to that of fluoroethylene vinyl ether (FEVE) such as those supplied under the mark Lumiflon^{™} from AGC corporation. Common test methods for these comparisons as specified in QUALICOAT, a global quality label organization, are xenon arc according to ISO 16474-2 and UVB according to ISO 16474-3.

Thus, in certain embodiments, the cured coating compositions on such articles exhibit improved performance characteristics. For example, articles coated with the cured compositions of the invention can exhibit an Erichsen cupping test rating of greater than 4.0 mm onset of cracking, according to ISO-1520. Additionally, or separately, the cured coating compositions can exhibit a weatherability of greater than 45 or greater than 50 percent of 60-degree gloss retention at 5,000 hours of UVB light exposure according to ISO 16474-3 and 50 percent 60-degree loss retention at 7,000 hours of xenon arc light exposure according to ISO 16474-2.

The invention can be further illustrated by the following Examples of certain embodiments thereof, although it will be understood that these Examples are included merely for the purposes of illustration and are not intended to limit the scope of the invention unless otherwise specifically indicated.

### Examples

In these Examples, the following abbreviations are used:
TMCD = 2,2,4,4-tetramethyl-1,3-cyclobutanediol from Eastman Chemical Company
TMP= trimethylolpropane available from Sigma-Aldrich
CHDM= 1,4-Cyclohexanedimethanol from Eastman Chemical Company
Benzoin = Degassing agent available from Estron Inc.
HHPA = hexahydrophthalic anhydride available from Sigma-Aldrich
TPP = triphenylphosphite available from Sigma-Aldrich
IPA = purified isophthalic acid available from Sigma-Aldrich
P EPQ = Hastanox^{®} P-EPQ^{®} powder antioxidant available from Clariant
Primid^{®} XL 552 - hydroxyl alkyl amide crosslinker available from Estron inc.
Vestagon P1540 - a urethane crosslinker available from Evonik
GMA 300 - glycidylacrylate crosslinker available from Estron Inc.
Resiflow^{®} PL-200 - flow and wetting additive available from Estron Inc.
Butaflow BT-71 - A curing catalyst available from Estron Inc
Irganox^{®} 1076 - an antioxidant available from BASF
Cimbar^{®} XF - Barium sulfate pigment available from Cimbar Inc.
M130 - red Iron Oxide available from Lanxess
Black 10P922 - an iron oxide pigment available from Shepherd Inc.
YL 196 - Yellow inorganic pigment available from Shephard Inc
Ti Pure^{™} TS 6200 - titanium dioxide available from Chemours Inc.
Raven black 5000 UII available from Brila Inc
Tinuvin^{®} 405 is a UV absorber from BASF
Tinuvin^{®} 144 is a hindered amine light stabilizer from BASF

A set of resins was made to determine the effect of resin properties and composition on mechanical properties. TMCD level, TMP (trimethylolpropane) level and acid number were varied. Table 1 shows the molar composition of the glycols/polyols used in the experiments. Example 4 is a comparative example, which comprises an aromatic diacid, isophthalic acid (IPA).

**Table 1**

| Example No. | HHPA mole % of total acid | IPA mole % of total acid | TMCD mole percent of total glycol | TMP mole percent of total glycol | CHDM mole percent of total glycol |
|---|---|---|---|---|---|
| 1 | 100 | -- | 46 | 6 | 48 |
| 2 | 100 | -- | 26 | 10 | 64 |
| 3 | 100 | -- | 46 | 8 | 46 |
| 4 | 50 | 50 | 26 | 10 | 64 |

**Table 2 - Weight percent of monomer charge resins**

| Example No. | HHPA | IPA | TMCD | CHDM | TMP |
|---|---|---|---|---|---|
| 1 | 57.5 | -- | 19.6 | 20.5 | 2.4 |
| 2 | 58 | -- | 11 | 27 | 3.9 |
| 3 | 57.8 | -- | 19.5 | 19.5 | 3.2 |
| 4 (comparative) | 29.3 | 28.3 | 11.1 | 27.3 | 4 |

| | | | | | |
|---|---|---|---|---|---|
| NOTE: Triphenyl phosphite and Fascat^{®} 4100 catalyst (PMC) were 0.1% of total charge weight. | | | | | |

### Typical synthesis procedure:

A Camille program was used to control the polymerization reaction. The resin was prepared in a two-liter reaction kettle equipped with a heating mantle, mechanical stirrer, thermocouple, nitrogen blanket, oil-heated partial condenser (103°C - 105°C), condensate trap, and water-cooled total condenser (15°C). The entire reaction was carried out under nitrogen blanket (0.4 standard cubic centimeters per minute or sccm) unless otherwise mentioned. The reaction procedure is as follows:
A: Stage 1 monomer (hexahydrophthalic anhydride, TMP and 2,2,4,4-tetramethyl-1,3-cyclobutane diol) were charged in the reaction kettle, and started to melt down the mixture by heating up the reaction solution up to 100 °C under nitrogen blanket and the stirring started at 100 °C. The stirring speed for the reaction was set to 300 rpm and increased towards the end of reaction.
B: The temperature was ramped to 165 °C at 1 °C/min as the exotherm happened. After the exotherm subsided, the reaction was cooled down to 150 °C.
C: Stage 2 monomers (neopentyl glycol and/or CHDM) and antioxidant (triphenyl phosphite) were added to the reaction mixture at 150 °C. The temperature of the reaction was ramped up to 235 °C at 0.1 °C/min. The reaction was held at 235 °C until the desired acid number was reached. Nitrogen blanket flow rate was increased to 1.0 sccm and nitrogen sub surface flow rate was started at 1.0 sccm, and the stirring speed was increased to 350-400 rpm when the acid number was ~5 mg KOH/g away from the target acid number to drive the reaction to desired acid number. Samples were withdrawn (stirring was stopped during sample withdrawal) at every hour for monitoring the acid number and viscosity throughout the reaction.
D: The reaction mass was poured into a turkey pan after the desired acid number was reached. The resin mass was allowed to cool down and broken into smaller pieces for further grinding. The ground resin was submitted for testing such as acid number, hydroxyl number, melt viscosity, molecular weight, monomer composition by gas chromatography (GC), glass transition temperature by DSC, and color. Final resin composition properties are shown in Table 3

**Table 3**

| Resin Example No. | T_{g} (°C) | Acid No. | Hydroxyl No. | Mₙ (g/mol) | Mw (g/mol) |
|---|---|---|---|---|---|
| 1 | 63.99 | 36.3 | 6.5 | 3,546 | 12,375 |
| 2 | 58.4 | 34.1 | 6.8 | 4,176 | 31,108 |
| 3 | 53 | 33.2 | 4.3 | 3,196 | 11,391 |
| 4 (comparative) | 63.05 | 35 | 14.6 | 4,918 | 240,078 |

**Coating Composition Examples (in grams) - Table 4**

| Components | Example 6 | Example 7 | Example 8 | Example 9 | Example 10 | Example 11 (comparative) |
|---|---|---|---|---|---|---|
| Resin Ex. 1 | 430.3 | | | | | |
| Resin Ex. 2 | | 431.6 | | | | |
| Resin Ex. 3 | | | 432.2 | | | |
| Resin 3 repeat AN 33.7 | | | | 447.96 | 399.16 | |
| Resin Ex 4 | | | | | | 411.15 |
| GMA 300 | 0 | 0 | 0 | | 71.93 | |
| Primid^{®} XL-552 | 23.7 | 22.3 | 21.7 | 22.87 | 0 | 21.8 |
| Estron Resiflow^{®} PL-200 | 4.2 | 4.2 | 4.2 | 4.2 | 4.2 | 4.2 |
| Benzoin | 2.1 | 2.1 | 2.1 | 2.1 | 2.1 | 2.1 |
| Irganox^{®} 1076 | 4.2 | 4.2 | 4.2 | 4.2 | 4.2 | 4.2 |
| P EPQ | 4.2 | 4.2 | 4.2 | 4.2 | 4.2 | 4.2 |
| Tinuvin 405 | 0 | 0 | 0 | 14 | 14 | 14 |
| Tinuvin 144 | 0 | 0 | 0 | 7 | 7 | 7 |
| Cimbar^{®} XF | 87.5 | 87.5 | 87.5 | 123.13 | 123.2 | 87.5 |
| M130 | 16.1 | 16.1 | 16.1 | 0 | 0 | 16.1 |
| Raven 5000 UIIP | 0 | 0 | 0 | 4.2 | 4.2 | 0 |
| Black 10P922 | 28.0 | 28.0 | 28.0 | 0 | 0 | 28 |
| YL196 | 77.0 | 77.0 | 77.0 | 0 | 0 | 77 |
| DuPont Ti Pure^{™} TS-6200 | 22.8 | 22.8 | 22.8 | 65.76 | 65.8 | 22.8 |

Each coating composition was weighed into a container. The compositions were then milled using a Vitamix mill. The resulting milled compositions were extruded on a two-zone twin screw extruder at 320 RPM and 60-70% torque. Zone 1 was heated to 100°C while Zone 2 was at 110°C. The compositions were cooled on a twin roll chiller at 2-5°C and collected in a plastic bag. The compositions were allowed to fully cool to room temperature overnight. They were then powdered using a Strand mill. The resulting powder coating compositions were sieved using 106-micron mesh. The sieved compositions were then considered ready to spray.

The coating compositions were applied to AQT 36 aluminum available from Q-panel using and electrostatic spray gun. The coated panels were cured in an electric oven for a total of 20 minutes at 200°C. The resulting coatings had a cured film build of 50 µm (2 mils) - 62.5 µm (2.5 mils).

The coatings were tested for flexibility using the Erichsen cupping test as specified in Qualicoat Class three specifications, using ISO 1520 The results are set forth below in Table 5:

**Table 5**

| Composition Example No. | Cross-linker | Erichsen Cupping Crack | Erichsen Cupping Delamination |
|---|---|---|---|
| 6 | XL-552 | 4.3 | 4.6 |
| 7 | XL-552 | 7.1 | 6.2 |
| 8 | XL-552 | 4.8 | 4.8 |
| 9 | XL-552 | 3.63 | 5.18 |
| 10 | GMA 300 | 3.5 | 5.9 |
| 11 (comparative) | XL-552 | NA | 3.43 |

As you can see, using TMCD, Tg's above 50°C and good Erichsen cupping can be achieved without using aromatic components in the resin.

### Weathering Examples

A TMCD resins was made and tested in Xenon 16474-2 and UVB 16474-3 accelerated weathering testing. The resins tested was Resin Example 3, but formulated with Acid Number 31.8 but was otherwise prepared as described above. Two control resins were also tested. A commercially available super durable resin (SDP Crylcoat 4659) known to be comprised of aromatic diacid residues and has a Tg of 59°c, and a commercial fluoroethylene vinyl ether (FEVE) resin, Lumiflon 710. The coating compositions are shown below in Table 6 in grams.

**Table 6**

| Raw Material | Example 16 | Example 17 | Example 18 | Example 19 | Example 20 | Example 21 |
|---|---|---|---|---|---|---|
| SDP | 72.57 | 75.43 | | | | |
| Resin 3, but with an acid number of 38.1 | | | 72.70 | 75.56 | | |
| Lumiflon LF 710 | | | | | 60.50 | 62.91 |
| Primid^{®} XL-552 | 3.63 | 3.77 | 3.50 | 3.64 | | |
| Vestagon P1540 | | | | | 15.01 | 15.60 |
| Resiflow^{®} PL 200 | 0.60 | 0.60 | 0.60 | 0.60 | 0.31 | 0.31 |
| Butaflow BT-71 | | | | | 0.98 | 0.98 |
| Benzoin | 0.30 | 0.30 | 0.30 | 0.30 | 0.30 | 0.30 |
| Irganox 1076 | 0.60 | 0.60 | 0.60 | 0.60 | 0.60 | 0.60 |
| P EPQ | 0.60 | 0.60 | 0.60 | 0.60 | 0.60 | 0.60 |
| Tinuvin 405 | 2.00 | 0.00 | 2.00 | 0.00 | 2.00 | 0.00 |
| Tinuvin 144 | 1.00 | 0.00 | 1.00 | 0.00 | 1.00 | 0.00 |
| Cimbar XF | 17.60 | 17.60 | 17.60 | 17.60 | 17.60 | 17.60 |
| Raven 5000 UIIP | 1.10 | 1.10 | 1.10 | 1.10 | 1.10 | 1.10 |
| Total (weight percent) | 100 | 100 | 100 | 100 | 100 | 100 |

Each coating composition was weighed into a container. The compositions were then milled using a Vitamix mill. The resulting milled compositions were extruded on a two-zone twin screw extruder at 320 RPM and 60-70% torque. Zone 1 was heated to 100°C while Zone 2 was at 110°C. The coating compositions were cooled on a twin roll chiller at 2-5°C and collected in a plastic bag. The compositions were allowed to fully cool to room temperature overnight. They were then powdered using a Strand mill. The resulting compositions were sieved using 106-micron mesh. The sieved powder coating compositions were then considered ready to spray.

The compositions were applied to AQT 36 aluminum available from Q-panel using and electrostatic spray gun. The coated panels were cured in an electric oven for a total of 20 minutes at 200°C. The coated panels were place in duplicate into weathering chambers running ISO 16474-2 (Xenon) and ISO 16474-3 (UVB).

As evidenced in Figures 1 through 4, the accelerated weathering data clearly shows the TMCD-based resins perform comparably to the fluroethylene vinyl ether-based resins (FEVE).

## Claims

1. A powder coating composition comprising:
A. at least one carboxyl-functional polyester which comprises:
1. a polyol component comprising:
i. about 25 to about 75 mole percent of 2,2,4,4-tetramethyl-1,3-cyclobutanediol residues, based on the total moles of i, ii, iii, and iv;
ii. about 20 to about 65 mole percent of 1,4-cyclohexane dimethanol residues, based on the total moles of i, ii, iii, and iv;
iii. 0 to about 15 mole percent of acyclic diol residues, based on the total moles of i, ii, iii, and iv; and
iv. about 3 to about 20 mole percent of trimethylolpropane residues, based on the total moles of i, ii, iii, and iv; and
2. a dicarboxylic aid component comprising:
v. about 70 to about 100 mole percent of hexahydrophthalic anhydride residues, based on the total moles of v and vi; and
vi. 0 to about 30 mole percent of acyclic diacid residues, based on the total moles of v and vi;
wherein the polyester has a glass transition temperature of about 45° to 90°C as measured via DSC, an acid number of about 20 to about 100 mg KOH/g, a number average molecular weight of about 2,000 to 10,000 g/mole, and a weight average molecular weight of about 5,000 to 100,000 g/mole; and
B. one or more compounds reactive with the carboxyl-functional polyester.

2. The composition of claim 1, wherein the compound reactive with the carboxyl-functional polyester is a cross-linker chosen from β-hydroxyalkylamides and glycidyl-functional compounds.

3. The composition of claim 1, wherein the compound reactive with the carboxyl-functional polyester is an epoxy resin.

4. The composition of claim 1, wherein the polyol component comprises about 30 to about 65 mole percent of 2,2,4,4-tetramethyl-1,3-cyclobutanediol residues; about 30 to about 60 mole percent of 1,4-cyclohexane dimethanol residues; 0 to about 10 mole percent of an acyclic diol, and wherein the dicarboxylic acid component comprises about 100 to about 80 mole percent of hexahydrophthalic anhydride residues; and 0 to about 20 mole percent of acyclic diacid residues.

5. The composition of claim 1, wherein the polyol component comprises about 40 to about 55 mole percent of 2,2,4,4-tetramethyl-1,3-cyclobutanediol residues, about 40 to 55 mole percent of 1,4-cyclohexane dimethanol residues, 0 to about 5 mole percent of an acyclic diol, and 3 to about 15 mole percent of trimethylolpropane resides, and wherein the dicarboxylic acid component comprises about 90 to about 100 mole percent of hexahydrophthalic anhydride residues, and 0 to about 10 mole percent of an acyclic aliphatic diacid.

6. The composition of claim 1, wherein the acyclic diol is chosen from neopentyl glycol, 1,6-hexanediol, 1,4-butanediol, 2-methyl-1,3-propanediol, and 2-butyl-2-ethyl-1,3-propanediol, preferably being neopentyl glycol.

7. The composition of claim 1, wherein the acyclic diacid is chosen from succinic acid, adipic acid, and sebacic acid, preferably being adipic acid.

8. The composition of claim 1, wherein the polyester has an acid number of about 40 to 60 mg KOH/g and/or a T_{g} of about 55° to about 75°C.

9. The composition of claim 1, wherein the β-hydroxyalkylamide is chosen from bis(N,N'-dihydroxyethyl)adipamide, bis(N,N'-dihydroxypropyl)adipamide, or a mixture thereof.

10. The composition of claim 1, wherein the polyester is present in an amount of about 70 to about 97 weight percent, and the compound reactive with the carboxyl-functional polyester is present in an amount of about 3 to about 30 weight percent, based on the total amount of the composition.

11. The composition of claim 1, wherein the polyol component comprises about 40 to about 55 mole percent of 2,2,4,4-tetramethyl-1,3-cyclobutanediol residues, about 40 to 55 mole percent of 1,4-cyclohexane dimethanol residues, 0 to about 5 mole percent of an acyclic diol, and 5 to about 12 mole percent of trimethylolpropane resides, and wherein the dicarboxylic acid component comprises about 90 to about 100 mole percent of hexahydrophthalic anhydride residues, and 0 to about 10 mole percent of an acyclic diacid;
wherein the polyester has an acid number of about 20 to about 80 mg KOH/g; and wherein the one or more compounds reactive with the carboxyl-functional polyester is a β-hydroxyalkylamide cross-linker.

12. The composition of claim 11, wherein the β-hydroxyalkylamide cross-linker is present in an amount of about 3 to about 20 weight percent, based on the total weight of A and B.

13. An article coated with the cured coating composition of claim 1 or 11.

14. The article of claim 13, wherein the cured coating exhibits an Erichsen cupping delamination test rating of greater than 4.5 mm onset of cracking, according to ISO-1520.

15. The article of claim 13, wherein the cured coating exhibits a weatherability of greater than 45 percent of 60-degree gloss retention at 5,000 hours of UVB light exposure according to ISO 16474-3 and greater than 50 percent of 60 degree gloss retention at 7,000 hours of xenon arc light exposure according to ISO 16474-2.

## Patentansprüche

1. Pulverlackzusammensetzung, umfassend:
A. mindestens einen carboxylfunktionellen Polyester, der Folgendes umfasst:
1. eine Polyolkomponente, umfassend:
i. etwa 25 bis etwa 75 Molprozent 2,2,4,4-Tetramethyl-1,3-cyclobutanediol-Reste, bezogen auf die Gesamtmole von i, ii, iii und iv;
ii. etwa 20 bis etwa 65 Molprozent 1,4-Cyclohexandimethanol-Reste, bezogen auf die Gesamtmole von i, ii, iii und iv;
iii. 0 bis etwa 15 Molprozent Reste eines acyclischen Diols, bezogen auf die Gesamtmole von i, ii, iii und iv; und
iv. etwa 3 bis etwa 20 Molprozent Trimethylolpropan-Reste, bezogen auf die Gesamtmole von i, ii, iii und iv; und
2. eine Dicarbonsäurekomponente, umfassend:
v. etwa 70 bis etwa 100 Molprozent Hexahydrophthalsäureanhydrid-Reste, bezogen auf die Gesamtmole von v und vi; und
vi. 0 bis etwa 30 Molprozent Reste einer acyclischen Dicarbonsäure, bezogen auf die Gesamtmole von v und vi;
wobei der Polyester eine Glasübergangstemperatur von etwa 45 ° bis 90 °C, wie mittels DSC gemessen, eine Säurezahl von etwa 20 bis etwa 100 mg KOH/g, ein zahlenmittleres Molekulargewicht von etwa 2.000 bis 10.000 g/Mol und ein gewichtsmittleres Molekulargewicht von etwa 5.000 bis 100.000 g/Mol aufweist; und
B. eine oder mehrere mit dem carboxylfunktionellen Polyester reaktive Verbindungen.

2. Zusammensetzung nach Anspruch 1, wobei die mit dem carboxylfunktionellen Polyester reaktive Verbindung ein Vernetzer ist, der aus β-Hydroxyalkylamiden und glycidylfunktionellen Verbindungen ausgewählt ist.

3. Zusammensetzung nach Anspruch 1, wobei die mit dem carboxylfunktionellen Polyester reaktive Verbindung ein Epoxidharz ist.

4. Zusammensetzung nach Anspruch 1, wobei die Polyolkomponente etwa 30 bis etwa 65 Molprozent 2,2,4,4-Tetramethyl-1,3-cyclobutanediol-Reste; etwa 30 bis etwa 60 Molprozent 1,4-Cyclohexandimethanol-Reste; 0 bis etwa 10 Molprozent eines acyclischen Diols umfasst, und wobei die Dicarbonsäurekomponente etwa 100 bis etwa 80 Molprozent Hexahydrophthalsäureanhydrid-Reste; und 0 bis etwa 20 Molprozent Reste einer acyclischen Dicarbonsäure umfasst.

5. Zusammensetzung nach Anspruch 1, wobei die Polyolkomponente etwa 40 bis etwa 55 Molprozent 2,2,4,4-Tetramethyl-1,3-cyclobutanediol-Reste, etwa 40 bis 55 Molprozent 1,4-Cyclohexandimethanol-Reste, 0 bis etwa 5 Molprozent eines acyclischen Diols und 3 bis etwa 15 Molprozent Trimethylolpropan-Reste umfasst, und wobei die Dicarbonsäurekomponente etwa 90 bis etwa 100 Molprozent Hexahydrophthalsäureanhydrid-Reste und 0 bis etwa 10 Molprozent einer acyclischen aliphatischen Dicarbonsäure umfasst.

6. Zusammensetzung nach Anspruch 1, wobei das acyclische Diol aus Neopentylglykol, 1,6-Hexandiol, 1,4-Butandiol, 2-Methyl-1,3-propandiol und 2-Butyl-2-ethyl-1,3-propandiol ausgewählt ist, wobei es sich vorzugsweise um Neopentylglykol handelt.

7. Zusammensetzung nach Anspruch 1, wobei die acyclische Dicarbonsäure aus Bernsteinsäure, Adipinsäure und Sebacinsäure ausgewählt ist, wobei es sich vorzugsweise um Adipinsäure handelt.

8. Zusammensetzung nach Anspruch 1, wobei der Polyester eine Säurezahl von etwa 40 bis 60 mg KOH/g und/oder eine T_{g} von etwa 55 ° bis etwa 75 °C aufweist.

9. Zusammensetzung nach Anspruch 1, wobei das β-Hydroxyalkylamid aus Bis(N,N'-dihydroxyethyl)adipamid, Bis(N,N'-dihydroxypropyl)adipamid oder einer Mischung davon ausgewählt ist.

10. Zusammensetzung nach Anspruch 1, wobei der Polyester in einer Menge von etwa 70 bis etwa 97 Gewichtsprozent vorhanden ist und die mit dem carboxylfunktionellen Polyester reaktive Verbindung in einer Menge von etwa 3 bis etwa 30 Gewichtsprozent vorhanden ist, bezogen auf die Gesamtmenge der Zusammensetzung.

11. Zusammensetzung nach Anspruch 1, wobei die Polyolkomponente etwa 40 bis etwa 55 Molprozent 2,2,4,4-Tetramethyl-1,3-cyclobutanediol-Reste, etwa 40 bis 55 Molprozent 1,4-Cyclohexandimethanol-Reste, 0 bis etwa 5 Molprozent eines acyclischen Diols und 5 bis etwa 12 Molprozent Trimethylolpropan-Reste umfasst, und wobei die Dicarbonsäurekomponente etwa 90 bis etwa 100 Molprozent Hexahydrophthalsäureanhydrid-Reste und 0 bis etwa 10 Molprozent einer acyclischen Dicarbonsäure umfasst;
wobei der Polyester eine Säurezahl von etwa 20 bis etwa 80 mg KOH/g aufweist; und wobei die eine oder die mehreren mit dem carboxylfunktionellen Polyester reaktiven Verbindungen ein β-Hydroxyalkylamid-Vernetzer sind.

12. Zusammensetzung nach Anspruch 11, wobei der β-Hydroxyalkylamid-Vernetzer in einer Menge von etwa 3 bis etwa 20 Gewichtsprozent vorhanden ist, bezogen auf das Gesamtgewicht von A und B.

13. Gegenstand, beschichtet mit der gehärteten Beschichtungszusammensetzung nach Anspruch 1 oder 11.

14. Gegenstand nach Anspruch 13, wobei die gehärtete Beschichtung gemäß ISO-1520 eine Bewertung im Erichsen-Tiefungs-Delaminierungstest von größer als 4,5 mm Rissbeginn aufweist.

15. Gegenstand nach Anspruch 13, wobei die gehärtete Beschichtung gemäß ISO 16474-3 eine Bewetterung von größer als 45 Prozent des 60-Grad-Glanzerhalts bei 5.000 Stunden UVB-Lichtbestrahlung und gemäß ISO 16474-2 größer als 50 Prozent des 60-Grad-Glanzerhalts bei 7.000 Stunden Xenonbogenlichtbestrahlung aufweist.

## Revendications

1. Composition de revêtement en poudre comprenant :
A. au moins un polyester à fonction carboxyle qui comprend :
1. un composant poplyol comprenant :
i. environ 25 à environ 75 pour cent molaire de résidus de 2,2,4,4-tétraméthyl-1,3-cyclobutanediol, calculés sur la base du nombre total de moles de i, ii, iii et iv ;
ii. environ 20 à environ 65 pour cent molaire de résidus de 1,4-cyclohexane diméthanol, calculés sur la base du nombre total de moles de i, ii, iii et iv ;
iii. 0 à environ 15 pour cent molaire de résidus de diol acycliques, calculés sur la base du nombre total de moles de i, ii, iii et iv ; et
iv. environ 3 à environ 20 pour cent molaire de résidus de triméthylolpropane, calculés sur la base du nombre total de moles de i, ii, iii et iv ; et
2. un composant d'acide dicarboxylique comprenant :
v. environ 70 à environ 100 pour cent molaire de résidus d'anhydride hexahydrophthalique, calculés sur la base du nombre total de moles de v et vi ; et
vi. 0 à environ 30 pour cent molaire de résidus de diacide acycliques, calculés sur la base du nombre total de moles de v et vi ;
dans lequel le polyester présente une température de transition vitreuse d'environ 45° à 90 °C mesurée par DSC, un indice d'acide d'environ 20 à environ 100 mg KOH/g, une masse moléculaire moyenne en nombre d'environ 2000 à 10000 g/mol et une masse moléculaire moyenne en poids d'environ 5000 à 100000 g/mol ; et
B. un ou plusieurs composés réactifs avec le polyester à fonction carboxyle.

2. Composition selon la revendication 1, dans laquelle le composé réactif avec le polyester à fonction carboxyle est un agent de réticulation choisi parmi les β-hydroxyalkylamides et les composés à fonction glycidyle.

3. Composition selon la revendication 1, dans laquelle le composé réactif avec le polyester à fonction carboxyle est une résine époxy.

4. Composition selon la revendication 1, dans laquelle le composant polyol comprend environ 30 à environ 65 pour cent molaire de résidus de 2,2,4,4-tétraméthyl-1,3-cyclobutanediol ; environ 30 à environ 60 pour cent molaire de résidus de 1,4-cyclohexane diméthanol ; 0 à environ 10 pour cent molaire d'un diol acyclique, et dans laquelle le composant acide dicarboxylique comprend environ 100 à environ 80 pour cent molaire de résidus d'anhydride hexahydrophthalique ; et 0 à environ 20 pour cent molaire de résidus de diacide acyclique.

5. Composition selon la revendication 1, dans laquelle le composant polyol comprend environ 40 à environ 55 pour cent molaire de résidus de 2,2,4,4-tétraméthyl-1,3-cyclobutanediol, environ 40 à 55 pour cent molaire de résidus de 1,4-cyclohexane diméthanol, 0 à environ 5 pour cent molaire d'un diol acyclique, et 3 à environ 15 pour cent molaire de résidues de triméthylolpropane, et dans laquelle le composant acide dicarboxylique comprend environ 90 à environ 100 pour cent molaire de résidus d'anhydride hexahydrophthalique, et 0 à environ 10 pour cent molaire d'un diacide aliphatique acyclique.

6. Composition selon la revendication 1, dans laquelle le diol acyclique est choisi parmi le néopentyl glycol, le 1,6-hexanediol, le 1,4-butanediol, le 2-méthyl-1,3-propanediol et le 2-butyl-2-éthyl-1,3-propanediol, de préférence le néopentyl glycol.

7. Composition selon la revendication 1, dans laquelle le diacide acyclique est choisi parmi l'acide succinique, l'acide adipique et l'acide sébacique, de préférence l'acide adipique.

8. Composition selon la revendication 1, dans laquelle le polyester a un indice d'acide d'environ 40 à 60 mg KOH/g et/ou une T_{g} d'environ 55° à environ 75 ° C.

9. Composition selon la revendication 1, dans laquelle le β-hydroxyalkylamide est choisi parmi le bis(N,N'-dihydroxyéthyl)adipamide, le bis(N,N'-dihydroxypropyl)adipamide ou un mélange de ceux-ci.

10. Composition selon la revendication 1, dans laquelle le polyester est présent en une quantité d'environ 70 à environ 97 pour cent en poids, et le composé réactif avec le polyester à fonction carboxyle est présent en une quantité d'environ 3 à environ 30 pour cent en poids, par rapport à la quantité totale de la composition.

11. Composition selon la revendication 1, dans laquelle le composant polyol comprend environ 40 à environ 55 pour cent molaire de résidus de 2,2,4,4-tétraméthyl-1,3-cyclobutanediol, environ 40 à environ 55 pour cent molaire de résidus de 1,4-cyclohexane diméthanol, 0 à environ 5 pour cent molaire d'un diol acyclique, et 5 à environ 12 pour cent molaire de résidus de triméthylolpropane, et dans laquelle le composant acide dicarboxylique comprend environ 90 à environ 100 pour cent molaire de résidus d'anhydride hexahydrophthalique ; et 0 à environ 10 pour cent molaire d'un diacide acyclique ;
dans lequel le polyester a un indice d'acide d'environ 20 à environ 80 mg KOH/g ; et dans lequel les un ou plusieurs composés réactifs avec le polyester à fonction carboxyle sont un agent de réticulation β-hydroxyalkylamide.

12. Composition selon la revendication 11, dans laquelle l'agent de réticulation β-hydroxyalkylamide est présent en une quantité d'environ 3 à environ 20 pour cent en poids, sur la base du poids total de A et B.

13. Article revêtu avec la composition de revêtement durcie selon la revendication 1 ou 11.

14. Article selon la revendication 13, dans lequel le revêtement durci présente une note de l'essai de délamination par emboutissage d'Erichsen supérieure à 4,5 mm avant l'apparition des fissures, selon la norme ISO-1520.

15. Article selon la revendication 13, dans lequel le revêtement durci présente une résistance aux intempéries supérieure à 45 % de la rétention de brillance à 60 degrés après 5000 heures d'exposition à la lumière UVB selon la norme ISO 16474-3 et supérieure à 50 % de la rétention de brillance à 60 degrés après 7000 heures d'exposition à la lumière à arc au xénon selon la norme ISO 16474-2.
